# EUROPEAN PATENT APPLICATION

(11) **EP 1 594 263 A1**
(43) Date of publication of application: **09.11.2005**
(21) Application number: 04291146.1
(22) Date of filing: 04.05.2004
(51) Int. Cl.: H04L 12/56

(54) **Frame-to-cell traffic scheduling**

(71) Applicant: ALCATEL, 75008 Paris (FR)
(72) Inventor: Balint, Zoltan, 2018 Antwerp (BE)
(74) Representative: Narmon, Gisèle Marie Thérèse

(57) **Abstract**

Network units (1) like access multiplexers comprise scheduling units (2,3,4) for scheduling frame-to-cell traffic. By making the buffering of cells in segmenting parts (3) per output interface (6,7,8) independent from the virtual connection (71,72,73) of that output interface (6,7,8) to be used, it is no longer necessary to have a buffer (31,32) per virtual connection (71,72,73). As a result, fewer buffers (31,32) are necessary, cell schedulers (41) in forwarding parts (4) can become less complex, and mutually different frame schedulers (25,26) in receiving parts (2) are no longer required. The network unit (1) according to the invention is migrated to a large extent. The frames comprise Ethernet frames, and the cells comprise asynchronous/non-asynchronous transfer mode cells. The receiving parts (2) comprise fewer queues, and the forwarding parts (4) become less complex. The number of virtual connections (71,72,73) per output interface (6,7,8) is no longer limited by the number of buffers (31,32).

## Description

The invention relates to a network unit comprising a scheduling unit for scheduling frame-to-cell traffic, which scheduling unit comprises
- a receiving part for receiving at least two different kinds of frames from an input interface and for buffering the frames;
- a segmenting part for buffering one or more cells resulting from a segmentation of one buffered frame; and
- a forwarding part for forwarding the one or more cells to an output interface comprising at least one virtual connection.

Such a network unit for example comprises an access multiplexer such as for example a digital subscriber line access multiplexer etc.

A prior art network unit is of common general knowledge. Its receiving part receives different kinds of frames, for example first frames of a first frame size and different second frames of a different second size which all need to be segmented into cells having a cell size different from the frame sizes. These frames and cells are defined by quality of service parameters. In its segmenting part and in its forwarding part, the first frames for example need to be segmented into cells and forwarded within a first predefined maximum amount of packet delay and at a first predefined maximum amount of packet loss, and the second frames for example need to be segmented into cells and forwarded within a different second predefined maximum amount of packet delay and at a different second predefined maximum amount of packet loss. Thereto, the prior art network unit for example comprises a buffer per virtual connection. In other words, the buffering of the cells is related to the virtual connection to be used: In dependence of the virtual connection to be used, a buffer in the segmenting part is to be selected. Cells buffered in this buffer can only be supplied to the virtual connection corresponding with this buffer.

The known network unit is disadvantageous, inter alia, owing to the fact that it requires a complex cell scheduler in the forwarding part and mutually different frame schedulers in the receiving part: For example in case of (a virtual connection of) the output interface being asynchronous transfer mode based, the most relevant scheduling is done by means of a cell scheduler in the forwarding part. For example in case of (a virtual connection of) the output interface being non-asynchronous transfer mode based, the most relevant scheduling is done by means of a frame scheduler in the receiving part. So, in other words, the known network unit is relatively unmigrated.

It is an object of the invention, inter alia, to provide a network unit as defined in the preamble, which is relatively migrated.

The network unit according to the invention is characterised in that the buffering of the one or more cells is done independently from the virtual connection to be used.

By making the buffering of the one or more cells (for at least one output interface) independent from the virtual connection (of that output interface) to be used, it is no longer necessary to have a buffer per virtual connection. As a result, in the segmenting part fewer buffers are necessary, in the forwarding part the cell scheduler can become less complex, and in the receiving part mutually different frame schedulers are no longer required, only one kind of frame scheduler will be sufficient. These are great advantages, and the network unit according to the invention is migrated to a large extent. Of course, the fact that the buffering of the one or more cells is done independently from the forwarding may require some kind of static binding between a queue in the receiving part and a buffer in the segmenting part. In the segmenting part, the buffering of the one or more cells resulting from a segmentation of one buffered frame is usually done per segmentation buffer.

The input interface may comprise one or more input interfaces. The frames for example comprise Ethernet quality of service frames, and the cells for example comprise asynchronous transfer mode quality of service cells or non-asynchronous transfer mode quality of service cells. Other kinds of frames are not to be excluded, such as for example frame-relay frames, Internet Protocol packets and Multi Path Labeled Switching packets. Further advantages are fewer queues in the receiving part, less implementation complexity in the forwarding part, fewer cycles and resources consumed from a network processor, frame scheduling is kept on the same frame level, and one and the same implementation for both asynchronous transfer mode and non-asynchronous transfer mode based lines coupled to the output interface, such as for example digital subscriber lines. The number of virtual connections per line is no longer limited by the number of segmentation buffers because the cell buffering decision is decoupled from the forwarding decision with respect to the virtual connection to be used.

An embodiment of the network unit according to the invention is characterised in that the segmenting part comprises a number of buffers each for buffering one or more cells resulting from a segmentation of one buffered frame, which number of buffers for an output interface is smaller than a number of virtual connections of that output interface, which number of virtual connections comprises two or more virtual connections.

For example two buffers in the segmenting part, such as for example a high-priority buffer and a low-priority buffer, are sufficient to allow three or more virtual connections to be used. Each buffer holds one or more cells resulting from a segmentation of one frame. The high-priority buffer is for example associated with the high-priority queue of the frame scheduler in the receiving part, and and all the other queues of the frame scheduler in the receiving part are then associated with the low-priority buffer. While suiting the needs of quality of service goals, this simplification and association greatly reduces an implementation complexity.

An embodiment of the network unit according to the invention is characterised in that
- the receiving part comprises a frame scheduler for scheduling frames; and
- the forwarding part comprises a cell scheduler for scheduling cells.

As stated above, the frame scheduler no longer needs to be different for different kinds of cell traffic, and the cell scheduler may be of the lowest complexity.

An embodiment of the network unit according to the invention is characterised in that
- the receiving part comprises a first frame scheduler for scheduling first and second buffered frames and a second frame scheduler for scheduling third and fourth buffered frames;
- the segmenting part comprises two buffers each for buffering one or more cells resulting from a segmentation of one buffered frame, a first buffer being coupled to the first frame scheduler and a second buffer being coupled to the second frame scheduler; and
- the forwarding part comprises a cell scheduler for scheduling buffered cells, one side of the cell scheduler being coupled to the buffers and the other side of the cell scheduler being coupled to the output interface.

In this case, the first and second frames are scheduled by the first scheduler and the third and fourth frames are scheduled by the second scheduler, with the first buffer buffering one or cells resulting from a segmentation of one frame coming from the first scheduler and the second buffer buffering one or cells resulting from a segmentation of one frame coming from the second scheduler. This embodiment is advantageous in that in the receiving part the first and second frames are separated from the third and fourth frames. Of course, for one of the output interfaces, the two buffers are available, for an other output interface, two other buffers may be available or not.

A embodiment of the network unit according to the invention is characterised in that at least one frame scheduler comprises a frame interleaver and the cell scheduler comprises a cell interleaver, whereby the cell interleaver is overruled in case of both buffers comprising cells destined for the same virtual connection.

The cell interleaving advantage keeps jitter small, while still meeting the quality of service needs for all kinds of traffic (only certain kinds of conversational applications need cell interleaving on typically low speed links). Of course, only one high-priority virtual connection is supported for cell interleaving. Frame interleavers and cell interleavers are prior art interleavers common in the art. The frame from which the first cell was sent will have all its cells sent out before a next frame can proceed with its cells on the same virtual connection. This is to preserve frame integrity on an other end, where the reassembly buffers are located.

An embodiment of the network unit according to the invention is characterised in that the at least two different kinds of frames comprise voice frames and/or video frames and/or controlled load frames and/or best effort frames.

Voice and video frames require, for voice and video conferencing, cell interleaving. Voice frames require the highest quality of service, video frames require less quality of service, controlled load frames require less quality of service than the video frames, and best effort frames require the lowest quality of service of this group of frames.

The invention also relates to a scheduling unit for scheduling frame-to-cell traffic in a network unit, which scheduling unit comprises
- a receiving part for receiving at least two different kinds of frames from an input interface and for buffering the frames;
- a segmenting part for buffering one or more cells resulting from a segmentation of one buffered frame; and
- a forwarding part for forwarding the one or more cells to an output interface comprising at least one virtual connection.

The scheduling unit according to the invention is characterised in that the buffering of the one or more cells is done independently from the virtual connection to be used.

The invention yet also relates to a segmenting part for buffering cells in a scheduling unit for scheduling frame-to-cell traffic in a network unit, which scheduling unit comprises
- a receiving part for receiving at least two different kinds of frames from an input interface and for buffering the frames;
- the segmenting part for buffering one or more cells resulting from a segmentation of one buffered frame; and
- a forwarding part for forwarding the one or more cells to an output interface comprising at least one virtual connection.

The segmenting part according to the invention is characterised in that the buffering of the one or more cells is done independently from the virtual connection to be used.

The invention further relates to a method for scheduling frame-to-cell traffic in a network-unit, which method comprises the steps of
- receiving at least two different kinds of frames from an input interface and buffering the frames;
- buffering one or more cells resulting from a segmentation of one buffered frame; and
- forwarding the one or more cells to an output interface comprising at least one virtual connection.

The method according to the invention is characterised in that the buffering of the one or more cells is done independently from the virtual connection to be used.

The invention yet further relates to a processor program product for scheduling frame-to-cell traffic in a network-unit, which processor program product comprises the functions of
- receiving at least two different kinds of frames from an input interface and buffering the frames;
- buffering one or more cells resulting from a segmentation of one buffered frame; and
- forwarding the one or more cells to an output interface comprising at least one virtual connection.

The processor program product according to the invention is characterised in that the buffering of the one or more cells is done independently from the virtual connection to be used.

Embodiments of the scheduling unit according to the invention and of the segmenting part according to the invention and of the method according to the invention and of the processor program product according to the invention correspond with the embodiments of the network unit according to the invention.

US 5793747, US 5835494, US 6014367, US 6272109, US 6434160 and US 6556571 disclose (frame and/or cell) scheduling technologies. US 6430154 discloses a way to choose a virtual connection based on a code point, bridging information defines the virtual connection used by the outgoing frames. These prior art documents neither disclose nor point into a direction of decoupling the cell buffering decision from the forwarding decision with respect to the virtual connection to be used.

The invention is based upon an insight, inter alia, that the prior art cell buffering depends on the prior art virtual connection to be used, and is based upon a basic idea, inter alia, that the cell buffering can be done independently from the virtual connection to be used.

The invention solves the problem, inter alia, to provide a network unit as defined in the preamble, which is relatively migrated, and is advantageous, inter alia, in that the network unit comprises fewer components and is of a lower complexity and more generally applicable.

These and other aspects of the invention will be apparent from and elucidated with reference to the embodiments(s) described hereinafter.
Fig. 1 shows diagrammatically a first prior art network unit;
Fig. 2 shows diagrammatically a second prior art network unit; and
Fig. 3 shows diagrammatically a network unit according to the invention comprising a scheduling unit according to the invention, which scheduling unit according to the invention comprises a segmenting part according to the invention.

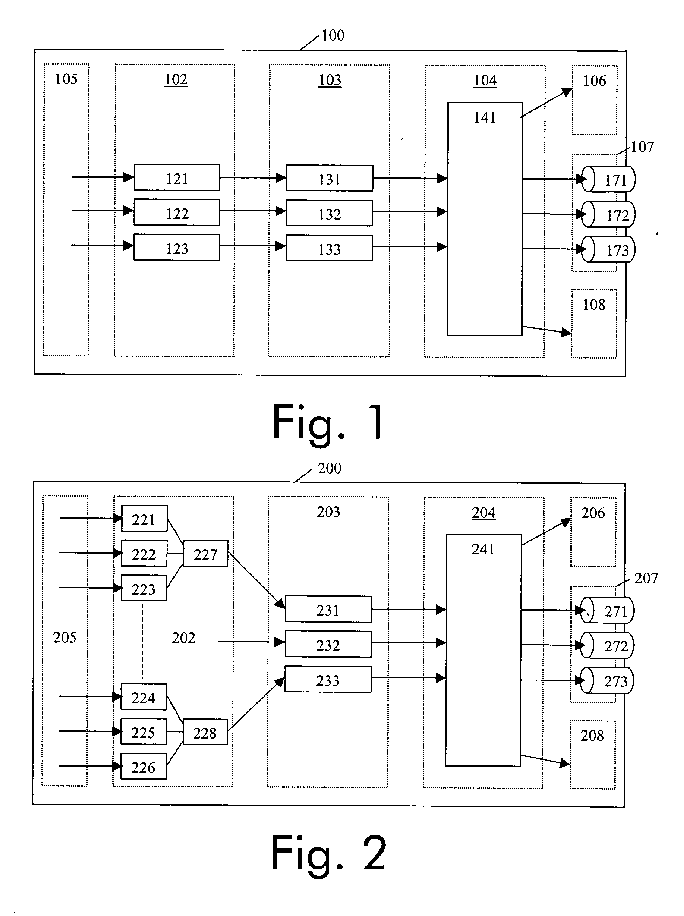

The first prior art network unit 100 shown in Fig. 1 comprises an input interface 105 (comprising one or more input interfaces), a receiving part 102, a segmenting part 103, a forwarding part 104 and output interfaces 106,107,108. The receiving part 102 comprises for example three queues 121,122,123 each for storing several frames coming from the input interface 105. Each queue 121,122,123 stores frames of different qualities such as for example packet delay requirements and/or packet loss requirements etc. The segmenting part 103 comprises, per output interface 106,107,108, three buffers 131,132,133 each coupled to the corresponding queue 121,122,123 in the receiving part 102 and each for storing one or more cells resulting from a segmentation of one buffered frame. The cell usually has a smaller cell size than the frame sizes of the frames. The forwarding part 104 comprises a prior art cell scheduler 141 for scheduling the cells coming from the segmenting part 103. Each cell is supplied to one of the virtual connections 171,172,173 of the output interface 107. The same way, for the other output interface 106 (108), the segmenting part 103 will comprise three other buffers not shown, in case of this other output interface 106 (108) also comprising three virtual connections not shown etc.

The second prior art network unit 200 shown in Fig. 2 comprises an input interface 205 (comprising one or more input interfaces), a receiving part 202, a segmenting part 203, a forwarding part 204 and output interfaces 206,207,208. The receiving part 202 comprises for example three queues 221,222,223 each for storing several frames coming from the input interface 205 and all coupled to a frame scheduler 227, and comprises for example three queues 224,225,226 each for storing several frames coming from the input interface 205 and all coupled to a frame scheduler 228. Each queue 221 (224), 222 (225), 223 (226) stores frames of different qualities such as for example packet delay requirements and/or packet loss requirements etc. The segmenting part 203 comprises, per output interface 206,207,208, three buffers 231,232,233. The buffer 231 is coupled to the frame scheduler 227, the buffer 232 is coupled to a frame scheduler not shown and the buffer 233 is coupled to the frame scheduler 228. The buffers 231,232,233 each store one or more cells resulting from a segmentation of one bufferd frame. The cell usually has a smaller cell size than the frame sizes of the frames. The forwarding part 204 comprises a prior art cell scheduler 241 for scheduling the cells coming from the segmenting part 203. Each cell is supplied to one of the virtual connections 271,272,273 of the output interface 207. The same way, for the other output interface 206 (208), the segmenting part 203 will comprise three other buffers not shown, in case of this other output interface 206 (208) also comprising three virtual connections not shown etc.

In Fig. 1 and 2, before the one or more cells are buffered in the segmenting part 103,203, a buffer 131,132,133,231,232,233 is to be selected. This selection defines the virtual connection 171,172,173,272,272,273 to be used. As a result, a rather complex cell scheduler 141,241 in the forwarding part 104,204 and mutually different frame schedulers 227,228 in the receiving part 202 are required. The known network unit 100,200 is relatively unmigrated.

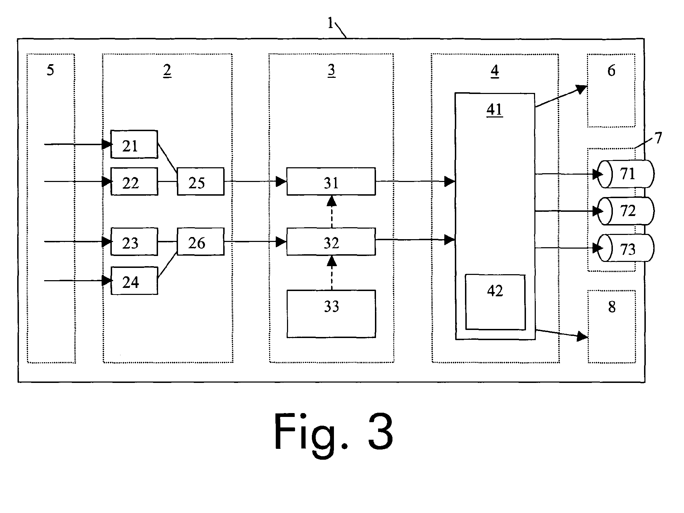

The relatively migrated network unit 1 according to the invention shown in Fig. 3 comprises an input interface 5 (comprising one or more input interfaces), a receiving part 2, a segmenting part 3 according to the invention, a forwarding part 4 and output interfaces 6,7,8. The receiving part 2, the segmenting part 3 according to the invention and the forwarding part 4 together form a scheduling unit 2,3,4 according to the invention. The receiving part 2 comprises for example two queues 21,22 each for storing several frames coming from the input interface 5 and all coupled to a frame scheduler 25, and comprises for example two queues 23,24 each for storing several frames coming from the input interface 5 and all coupled to a frame scheduler 26. Each queue 21,22,23,24 stores frames of different qualities such as for example packet delay requirements and/or packet loss requirements etc. The segmenting part 3 comprises, per output interface 6,7,8, two buffers 31,32. The buffer 31 is coupled to the frame scheduler 25, the buffer 23 is coupled to the frame scheduler 26. The buffers 31, 32 each store one or more cells resulting from a segmentation of one buffered frame. The cell usually has a smaller cell size than the frame sizes of the frames. The forwarding part 4 comprises a cell scheduler 41 for scheduling the cells coming from the segmenting part 3. Each cell is supplied to one of the virtual connections 71, 72, 73 of the output interface 7. The same way, for the other output interface 6 (8), the segmenting part 3 will comprise two other buffers not shown, in case of this other output interface 6 (8) also comprising three or more virtual connections not shown etc.

So, obviously, the number of virtual connections 71,72,73 per output interface 7 (which output interface 6,7,8 for example comprises a digital subscriber line) is no longer limited by the number of buffers 31,32 because the cell buffering decision is decoupled from the forwarding decision with respect to the virtual connection 71,72,73 to be used. This is a great advantage. By making the cell buffering (for at least one output interface 6,7,8) independent from the virtual connection 71,72,73 (of that output interface 6,7,8) to be used, it is no longer necessary to have a buffer 31,32 per virtual connection 71,72,73. As a result, in the segmenting part 3 fewer buffers 31,32 are necessary, in the forwarding part 4 the cell scheduler 41 can become less complex, and in the receiving part 2 mutually different frame schedulers are no longer required, only one kind of frame scheduler 25,26 will be sufficient. These are also great advantages

The frames for example comprise Ethernet quality of service frames, and the cells for example comprise asynchronous transfer mode quality of service cells or non-asynchronous transfer mode quality of service cells. Other kinds of frames are not to be excluded, such as for example frame-relay frames, Internet Protocol packets and Multi Path Labeled Switching packets. Further advantages are fewer queues in the receiving part 2, less implementation complexity in the forwarding part 4, fewer cycles and resources consumed from a network processor, frame scheduling is kept on the same frame level, and one and the same implementation for both asynchronous transfer mode and non-asynchronous transfer mode based output interfaces 6,7,8 (for example comprising digital subscriber lines).

In the segmenting part 3 according to the invention, the two buffers 31,32 are for example a high-priority buffer 31 and a low-priority buffer 32, and they are sufficient to allow three or more virtual connections 71,72,73 to be used. Each buffer 31,32 holds one or more cells resulting from a segmentation of at most one frame. The high-priority buffer 31 is associated with the frame scheduler 25, and the low-priority buffer 32 is associated with the frame scheduler 26. Alternatively, but not shown, the high-priority buffer 31 is for example associated with a high-priority queue of a frame scheduler in the receiving part 2, and all the other queues of the frame scheduler in the receiving part 2 are then associated with the low-priority buffer 32.

At least one of the frame schedulers 25,26 comprises a frame interleaver and the cell scheduler 41 comprises a cell interleaver, whereby the cell interleaver is overruled in case of both buffers 31,32 comprising cells destined for the same virtual connection 71,72,73. The cell interleaving advantage keeps jitter small, while still meeting the quality of service needs for all kinds of traffic (only certain kinds of interactive applications such as telephony or video conferencing need cell interleaving). Of course, only one high-priority virtual connection 71 is supported for cell interleaving. Frame interleavers and cell interleavers are prior art interleavers common in the art. The frame from which the first cell was sent will have all its cells sent out before a next frame can proceed with its cells on the same virtual connection. This is to preserve frame integrity on an other end, where the reassembly buffers are located. To realise the overruling, either the segmenting part 3 comprises a controller 33, or the cell scheduler 41 comprises a controller 42. These controllers 33,42 detect the presence of cells in both buffers 31,32 and their destination being virtual connection 71, and decide that, contrary to the fact that the buffer 31 is a high-priority buffer and the buffer 32 is a low-priority buffer, the one or more cells in buffer 32 are to be read out completely before the one or more cells in buffer 31 are to be read out. The queue 21 for example stores voice frames, the queue 22 for example stores video frames, the queue 23 for example stores controlled load frames and the queue 24 for example stores best effort frames. Voice and video frames require, for voice and video conferencing, cell interleaving. Voice frames require the highest quality of service, video frames require less quality of service, controlled load frames require less quality of service than the video frames, and best effort frames require the lowest quality of service of this group of frames. The quality of service for example comprises packet delay and packet loss requirements. Other requirements are not to be excluded.

The expression "for" in for example "for scheduling", "for receiving", "for buffering" and "for forwarding" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities. Each part 2,3,4 of the network unit 1 may comprise hardware, software and/or a mixture of both. The steps/functions of receiving, buffering and forwarding etc. do not exclude further steps, like for example, inter alia, the steps described for Fig. 3. The processor program product according to the invention is for example stored on a medium and can then be retrieved either directly from the medium or indirectly from the medium via a network.

## Claims

1. Network unit (1) comprising a scheduling unit (2,3,4) for scheduling frame-to-cell traffic, which scheduling unit (2,3,4) comprises
- a receiving part (2) for receiving at least two different kinds of frames from an input interface (5) and for buffering the frames;
- a segmenting part (3) for buffering one or more cells resulting from a segmentation of one buffered frame; and
- a forwarding part (4) for forwarding the one or more cells to an output interface (6,7,8) comprising at least one virtual connection (71,72,73);
**characterised in that** the buffering of the one or more cells is done independently from the virtual connection (71,72,73) to be used.

2. Network unit (1) as defined in claim 1,
**characterised in that** the segmenting part (3) comprises a number of buffers (31,32) each for buffering one or more cells resulting from a segmentation of one buffered frame, which number of buffers (31,32) for an output interface (6,7,8) is smaller than a number of virtual connections (71,72,73) of that output interface (6,7,8), which number of virtual connections (71,72,73) comprises two or more virtual connections (71,72,73).

3. Network unit (1) as defined in claim 1 or 2,
**characterised in that**
- the receiving part (2) comprises a frame scheduler (25,26) for scheduling buffered frames; and
- the forwarding part (4) comprises a cell scheduler (41) for scheduling buffered cells.

4. Network unit (1) as defined in claim 1,
**characterised in that**
- the receiving part (2) comprises a first frame scheduler (25) for scheduling first and second buffered frames and a second frame scheduler (26) for scheduling third and fourth buffered frames;
- the segmenting part (3) comprises two buffers (31,32) each for buffering one or more cells resulting from a segmentation of one buffered frame, a first buffer (31) being coupled to the first frame scheduler (25) and a second buffer (32) being coupled to the second frame scheduler (26); and
- the forwarding part (4) comprises a cell scheduler (41) for scheduling buffered cells, one side of the cell scheduler (41) being coupled to the buffers (31,32) and the other side of the cell scheduler (41) being coupled to the output interface (6,7,8).

5. Network unit (1) as defined in claim 3 or 4,
**characterised in that** at least one frame scheduler (25,26) comprises a frame interleaver and the cell scheduler (41) comprises a cell interleaver, whereby the cell interleaver is overruled in case of both buffers (31,32) comprising cells destined for the same virtual connection (71,72,73).

6. Network unit (1) as defined in claim 1,
**characterised in that** the at least two different kinds of frames comprise voice frames and/or video frames and/or controlled load frames and/or best effort frames.

7. Scheduling unit (2,3,4) for scheduling frame-to-cell traffic in a network unit (1), which scheduling unit (2,3,4) comprises
- a receiving part (2) for receiving at least two different kinds of frames from an input interface (5) and for buffering the frames;
- a segmenting part (3) for buffering one or more cells resulting from a segmentation of one buffered frame; and
- a forwarding part (4) for forwarding the one or more cells to an output interface (6,7,8) comprising at least one virtual connection (71,72,73);
**characterised in that** the buffering of the one or more cells is done independently from the virtual connection (71,72,73) to be used.

8. Segmenting part (3) for buffering cells in a scheduling unit (2,3,4) for scheduling frame-to-cell traffic in a network unit (1), which scheduling unit (2,3,4) comprises
- a receiving part (2) for receiving at least two different kinds of frames from an input interface (5) and for buffering the frames;
- the segmenting part (3) for buffering one or more cells resulting from a segmentation of one buffered frame; and
- a forwarding part (4) for forwarding the one or more cells to an output interface (6,7,8) comprising at least one virtual connection (71,72,73);
**characterised in that** the buffering of the one or more cells is done independently from the virtual connection (71,72,73) to be used.

9. Method for scheduling frame-to-cell traffic in a network-unit (1), which method comprises the steps of
- receiving at least two different kinds of frames from an input interface (5) and buffering the frames;
- buffering one or more cells resulting from a segmentation of one buffered frame; and
- forwarding the one or more cells to an output interface (6,7,8) comprising at least one virtual connection (71,72,73);
**characterised in that** the buffering of the one or more cells is done independently from the virtual connection (71,72,73) to be used.

10. Processor program product for scheduling frame-to-cell traffic in a network-unit (1), which processor program product comprises the functions of
- receiving at least two different kinds of frames from an input interface (5) and buffering the frames;
- buffering one or more cells resulting from a segmentation of one buffered frame; and
- forwarding the one or more cells to an output interface (6,7,8) comprising at least one virtual connection (71,72,73);
**characterised in that** the buffering of the one or more cells is done independently from the virtual connection (71,72,73) to be used.
